# EUROPEAN PATENT SPECIFICATION

(11) **EP 3 554 119 B1**
(45) Date of publication and mention of the grant of the patent: **03.02.2021**
(21) Application number: 17889844.1
(22) Date of filing: 19.12.2017
(51) Int. Cl.: H04W 24/10, H04B 7/024, H04B 7/06, H04B 17/00

(54) **CONFIGURATION METHOD FOR MEASUREMENT AND REPORTING OF CHANNEL STATE INFORMATION, AND RELATED DEVICES**
KONFIGURATIONSVERFAHREN ZUR MESSUNG UND MELDUNG VON KANALZUSTANDSINFORMATIONEN UND ZUGEHÖRIGE VORRICHTUNGEN
PROCÉDÉ DE CONFIGURATION DE MESURAGE ET DE COMPTE-RENDU D'INFORMATIONS D'ÉTAT DE CANAL, ET DISPOSITIFS ASSOCIÉS

(30) Priority: 09.01.2017 CN 201710013350
(43) Date of publication of application: 16.10.2019
(73) Proprietor: Huawei Technologies Co., Ltd., Longgang District Shenzhen, Guangdong 518129 (CN)
(72) Inventor: HAN, Wei, Shenzhen Guangdong 518129 (CN); HANG, Haicun, Shenzhen Guangdong 518129 (CN); BI, Xiaoyan, Shenzhen Guangdong 518129 (CN)
(74) Representative: Thun, Clemens
(86) International application number: PCT/CN2017/117198
(87) International publication number: WO 2018/126887

(56) References cited:
- EP-A1- 3 016 430
- WO-A1-2012/124552
- CN-A- 101 902 307
- CN-A- 102 045 762
- CN-A- 102 395 206
- CN-A- 102 595 469
- CN-A- 102 843 209
- CN-A- 105 075 322
- CN-A- 105 207 738
- "3 Generation Partnership Project; Technical Specification Group Radio Access Network; Evolved Universal Terrestrial Radio Access (E-UTRA); Physical layer procedures (Release 11)", 3GPP STANDARD; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V11.12.0, 29 September 2016 (2016-09-29), pages 1-184, XP051172642,

## Description

### TECHNICAL FIELD

The present invention relates to the field of communications technologies, and in particular, to a method for setting channel state information measurement and reporting, and a related device.

### BACKGROUND

To support measurement and reporting of channel state information (English: Channel State Information, CSI) required in a plurality of transmission modes or transmission schemes, a network device may set a CSI process according to a particular transmission scheme (transmission scheme) in a particular transmission mode (English: Transmission Mode, TM) by using radio resource control (English: Radio Resource Control, RRC) signaling. The CSI process includes settings related to CSI reporting, a CSI-reference signal (English: CSI-Reference Signal, CSI-RS) resource, and the like. A CSI reporting setting includes content (for example, a channel quality indicator (English: Channel Quality Indicator, CQI), a precoding matrix indicator (English: Precoding Matrix Indicator, PMI), and a rank indicator (English: Rank Indication, RI) that are required in the particular transmission scheme in the particular transmission mode), a frequency domain granularity (for example, broadband or narrowband), and the like of CSI measurement and reporting, and further includes a period attribute (for example, periodicity and a period, or aperiodicity), a subframe offset, and the like for CSI reporting. The CSI-RS resource includes a CSI-RS port (English: port) quantity, a CSI-RS port number, a training sequence setting, and the like, and further includes a period attribute (for example, periodicity and a period) of CSI-RS transmission, a subframe offset, and the like.

EP 3 016 430 A1 refers to a method and an apparatus for acquiring channel state information in an antenna array. A method for transmitting channel state information by a terminal comprises the step of: receiving relation information on a CSI-RS and a physical antenna from a base station by the terminal, the relation information including information on a first CSI-RS and a first physical antenna transmitting the first CSI-RS and information on a second CSI-RS and a second physical antenna transmitting the second CSI-RS; and transmitting first channel state information and second channel state information to the base station on the basis of the relation information by the terminal, wherein the first physical antenna and the second physical antenna may be included in one antenna array, the first channel state information may be information on a channel state between the terminal and the first physical antenna determined on the basis of the first CSI-RS, and the second channel state information may be information on a channel state between the terminal and the second physical antenna determined on the basis of the second CSI-RS.

WO 2012/124552 A1 refers to a Channel State Information (CSI) feedback method of a User Equipment (UE), which includes the following steps of: receiving from a Base Station (BS) a Channel State Information-Reference Signal (CSI-RS) measurement set configuration signal, which contains an indication of a CSI-RS measurement set configured for a UE; measuring a CSI-RS in the CSI-RS measurement set based on the indication of the CSI-RS measurement set to obtain metric information corresponding to a CSI-RS pattern in the CSI-RS measurement set; obtaining a CSI-RS report set which is selected from the CSI-RS measurement set based on the metric information; determining a CSI feedback resource corresponding to a CSI-RS pattern in the CSI-RS report set; and feeding back CSI corresponding to the CSI-RS pattern in the CSI-RS report set to the BS over the determined CSI feedback resource.

Further, prior art document "3. Generation Partnership Project; Technical Specification Group Radio Access Network; Evolved Universal Terrestrial Radio Access (E-UTRA), Physical layer procedures (Release 11)", 3GPP Standard; 3GPP TS 36.213, refers to characteristics of physical layer procedures in FDD and TDD modes of E-UTRA.

Based on the foregoing settings, user equipment (English: User Equipment, UE) measures and reports corresponding CSI information in the CSI reporting setting on a corresponding CSI-RS resource. For example, to support a spatial multiplexing (English: Spatial Multiplexing, SM) transmission scheme in TM 9, a narrowband PMI needs to be measured, and a CQI and a corresponding RI need to be calculated based on the PMI. To support a transmit diversity (English: Transmit Diversity, TxD) transmission scheme in TM 2, a broadband CQI needs to be calculated through measurement. In the prior art, if the UE needs to be switched between transmission schemes in different TMs, the network device needs to reset a TM and corresponding CSI reporting by using RRC signaling. In other words, CSI measurement and reporting support needed by the UE during switching between different transmission schemes in different TMs also depends on resetting by the network device in the RRC signaling. Because the RRC signaling is a semi-static setting, it is difficult to meet a requirement of dynamic switching between different transmission schemes.

### SUMMARY

Embodiments of the present invention provide a method for setting channel state information measurement and reporting, and a related device, to meet CSI measurement and reporting requirements of user equipment in different transmission schemes, and reduce signaling settings.This problem is solved by the subject matter of the independent claims. Further implementation forms are provided in the dependent claims.

The present invention is restricted to the CSI measurement setting as defined by [0058] and is clearer and easier to understand in description of the following embodiments.

### BRIEF DESCRIPTION OF DRAWINGS

FIG. 1 is a schematic architectural diagram of a communications system according to an embodiment of the present invention;
FIG. 2 is a schematic diagram of another application scenario according to an embodiment of the present invention;
FIG. 3 is a method for setting channel state information measurement and reporting according to an embodiment of the present invention;
FIG. 4 is a schematic diagram of a CSI measurement setting according to an embodiment of the present invention;
FIG. 5 is a schematic diagram of another CSI measurement setting according to an example to enhance the understanding of the invention;
FIG. 6 is a schematic flowchart of another method for setting channel state information measurement and reporting according to an example to enhance the understanding of the invention;
FIG. 7 is a schematic diagram of another CSI measurement setting according an example to enhance the understanding of the invention;
FIG. 8 is a schematic diagram of another CSI measurement setting according to an example to enhance the understanding of the invention;
FIG. 9 is a schematic diagram of another CSI measurement setting according to an example to enhance the understanding of the invention;
FIG. 10 is a schematic structural diagram of a network device according to an embodiment of the present invention;
FIG. 11 is a schematic structural diagram of user equipment according to an embodiment of the present invention;
FIG. 12 is a schematic structural diagram of another network device according to an embodiment of the present invention; and
FIG. 13 is a schematic structural diagram of other user equipment according to an embodiment of the present invention.

### DESCRIPTION OF EMBODIMENTS

Terms used in an implementation part of the present invention are intended only to explain specific embodiments of the present invention, and not intended to limit the present invention. The following clearly describes technical solutions in the embodiments of the present invention with reference to accompanying drawings in the embodiments of the present invention.

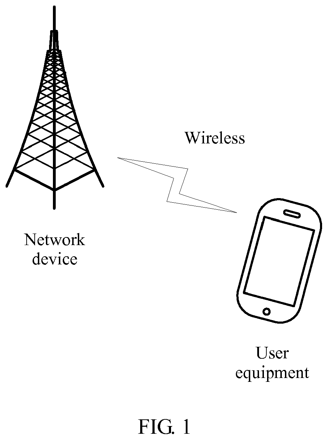

FIG. 1 is a schematic architectural diagram of a communications system according to an embodiment of the present invention. The communications system includes user equipment and a network device. The user equipment and the network device communicate with each other by using an air interface technology. The air interface technology may include: existing 2G (for example, a global system for mobile communications (English: Global System for Mobile Communications, GSM)), 3G (for example, a universal mobile telecommunications system (English: Universal Mobile Telecommunications System, UMTS), wideband code division multiple access (English: Wideband Code Division Multiple Access, WCDMA), or time division-synchronous code division multiple access (English: Time Division-Synchronous Code Division Multiple Access, TD-SCDMA)), 4G (for example, FDD LTE or TDD LTE), a new RAT system, for example, a 5G system to be launched in the future, and the like.

The user equipment described in the present invention is UE in a general sense. In addition, the user equipment may be referred to as a mobile console, an access terminal, a subscriber unit, a subscriber station, a mobile station, a remote station, a remote terminal, a mobile device, a user terminal, a terminal, a wireless communications device, a user agent, a user apparatus, or the like. The user equipment may be a cellular phone, a cordless telephone set, a session initiation protocol (English: Session Initiation Protocol, SIP) phone, a wireless local loop (English: Wireless Local Loop, WLL) station, a personal digital assistant (English: Personal Digital Assistant, PDA), a handheld device having a wireless communication function, a computing device or another processing device connected to a wireless modem, an in-vehicle device, a wearable device, a mobile console in a future 5G network, user equipment in a future evolved public land mobile network (English: Public Land Mobile Network, PLMN), or the like. In addition, in this embodiment of the present invention, the user equipment may include another device that can perform data communication with the network device (for example, a base station), such as a relay (English: Relay).

The network device described in the present invention may be a device configured to communicate with the user equipment. Specifically, in a wireless communications system, the network device is a device that communicates with the user equipment in a wireless manner. For example, the network device may be a base transceiver station (English: Base Transceiver Station, BTS) in a GSM or CDMA system, or may be an NB (English: NodeB) in WCDMA, or may be an evolved NodeB (English: evolved NodeB, eNB) in LTE, or a relay station, an in-vehicle device, a wearable device, a network device in a future 5G network, or a network device in a future evolved PLMN

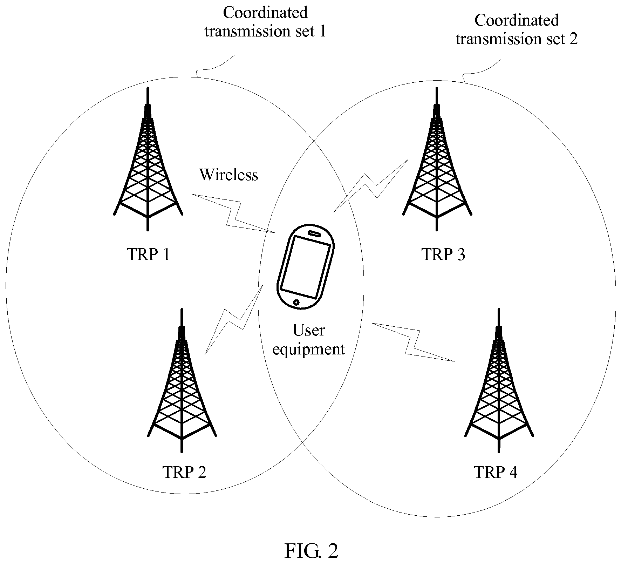

FIG. 2 is a schematic diagram of another application scenario according to an embodiment of the present invention. FIG. 2 shows a hyper cell (hyper cell) including high-density transceiver points (Transceiver Point, TRP). As shown in FIG. 2, in a high-density TRP transmission scenario, user equipment may communicate with a plurality of transceiver points, to form a communications system centered on the user equipment (UE-cell-center-like). Usually, a plurality of transceiver points in neighboring locations may be grouped into a group of transceiver points denoted by a dotted circle in the accompanying drawing. The group of transceiver points may be referred to as a TRP set (TRP Set) or a coordinated transmission set. It should be noted that a TRP set division manner is not limited to a location-based division manner, and may be another division manner. For example, highly-correlated TRPs are grouped into a group. This is not limited in this embodiment of the present invention.

During specific implementation, the transceiver point may be a network device such as a base transceiver station (Base Transceiver Station, BTS) in a GSM system or a CDMA system, or may be a NodeB (NodeB) in a WCDMA system, or may be an evolved NodeB (Evolved NodeB, eNB or eNodeB) in an LTE system, or a base station or a micro base station in a future 5G network. This is not limited in the present invention.

During specific implementation, the user equipment may support a CoMP transmission manner. To be specific, the user equipment may communicate with two or more transceiver points in the accompanying drawing. The user equipment may be referred to as an access terminal, a user device, a subscriber unit, a subscriber station, a mobile station, a mobile console, a remote station, a remote terminal, a mobile device, a user terminal, a terminal, a wireless communications device, a user agent, or a user apparatus. During specific implementation, the user equipment may be mobile or fixed, and the user equipment may be a cellular phone, a cordless telephone set, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device or another processing device connected to a wireless modem, an in-vehicle device, a wearable device, user equipment in a future 5G network, or the like. With rising of an Internet of things (Internet of Things, IoT) technology, increasing devices that previously do not have a communication function, for example but not limited to, household appliances, vehicles, tools, service devices, and service facilities, begin to implement a wireless communication function by using a wireless communications unit, to access a wireless communications network and support remote control. Such devices have the wireless communication function due to use of the wireless communication unit, and therefore can also serve as the foregoing user equipment.

For example, in this embodiment of the present invention, a TRP 1 and a TRP 2 communicate with the user equipment as a coordinated set 1. In this case, signals sent by a TRP 3 and a TRP 4 as a coordinated set 2 are interfering signals to the user equipment. A network device needs to configure the user equipment to enable the user equipment to measure CSI (including a CQI) of the coordinated set 1 including the TRP 1 and the TRP 2. The TRP 3 and the TRP4 are interfering TRPs.

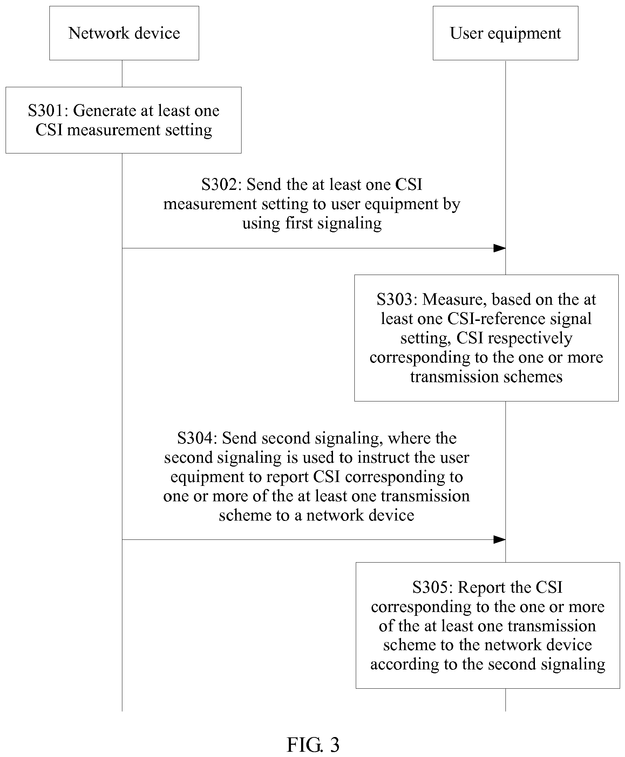

FIG. 3 is a schematic flowchart of a method for setting channel state information measurement and reporting according to an embodiment of the present invention. The method includes, but is not limited to, the following steps.

S301: A network device generates at least one CSI measurement setting.

In this embodiment of the present invention, each of the at least one CSI measurement setting (CSI measurement setting) includes at least two CSI reporting setting (CSI reporting setting) and one CSI-reference signal (English: Reference Signal, RS) setting (CSI-RS setting). The network device generates one CSI measurement setting, and the CSI measurement setting includes two CSI reporting settings, one CSI-reference signal setting, and two transmission scheme settings. The two transmission scheme settings each are corresponding to one CSI reporting setting. Therefore, CSI that needs to be reported in the two transmission schemes are set to be different. A transmission scheme that is set in a transmission scheme setting includes the SM transmission scheme and the beam-based TxD transmission scheme.

The CSI-reference signal setting is used by user equipment to measure CSI respectively corresponding to the at least one transmission scheme. Each CSI reporting setting is corresponding to one transmission scheme setting, and indicates content that needs to be reported in the reference transmission scheme. Alternatively, each CSI reporting setting is corresponding to a plurality of transmission scheme settings.

Herein, the CSI reporting setting may include at least one of content (for example, a CQI, a PMI, an RI, and a CRI that are required in a particular transmission scheme in a particular transmission mode), a frequency domain granularity (for example, broadband or narrowband), and the like of CSI measurement and reporting, and may further include at least one of a period attribute (for example, periodicity and a period, or aperiodicity) and a subframe offset for CSI reporting. Reference transmission schemes include, but are not limited to: the SM transmission scheme and the beam-based TxD transmission scheme.

Different CSI-reference signal settings are corresponding to different CSI-reference signal allocation and transmission manners. The CSI-reference signal setting may include at least one of a period attribute (for example, periodicity and a period) of CSI-reference signal transmission, a subframe offset, and the like, may also include at least one of a CSI-reference signal resource set definition (for example, a CSI-reference signal resource included in a set) and the like, and may further include at least one of CSI-reference signal resource information (for example, a CSI-reference signal port quantity, a CSI-reference signal port number, a training sequence, an allocation manner for the training sequence on a resource element (RE)), and the like.

In addition, the CSI measurement setting may include a corresponding reference transmission scheme setting.

S302: The network device sends the at least one CSI measurement setting to user equipment by using first signaling.

S303: The user equipment receives the at least one CSI measurement setting that is sent by the network device by using the first signaling, and the user equipment measures, based on the at least one CSI-reference signal setting, CSI respectively corresponding to the one or more transmission schemes.

After receiving the at least one CSI measurement setting sent by the network device, the user equipment measures, on a reference signal resource indicated by a corresponding CSI-reference signal setting, the CSI respectively corresponding to the one or more transmission schemes, in other words, measures content specified in CSI reporting setting. As described above, the content includes content (for example, a CQI, a PMI, an RI, and a CRI that are required in a particular transmission scheme in a particular transmission mode), a frequency domain granularity (for example, broadband or narrowband), and the like of CSI measurement and reporting, and may further include at least one of a period attribute (for example, periodicity and a period, or aperiodicity) and a subframe offset for CSI reporting.

S304: The network device sends second signaling to the user equipment, where the second signaling is used to instruct the user equipment to report CSI corresponding to one or more of the at least one transmission scheme to the network device.

In this embodiment of the present invention, the network device instructs the user equipment to report corresponding CSI according to one or more reference transmission scheme settings. The first signaling and the second signaling may be signaling at different layers. For example, the first signaling is RRC signaling, and the second signaling is MAC CE signaling; or the first signaling is RRC signaling, and the second signaling is DCI signaling; or the first signaling is MAC CE signaling, and the second signaling is DCI signaling.

S305: The user equipment receives the second signaling sent by the network device, and reports the CSI corresponding to the one or more of the at least one transmission scheme to the network device according to the second signaling.

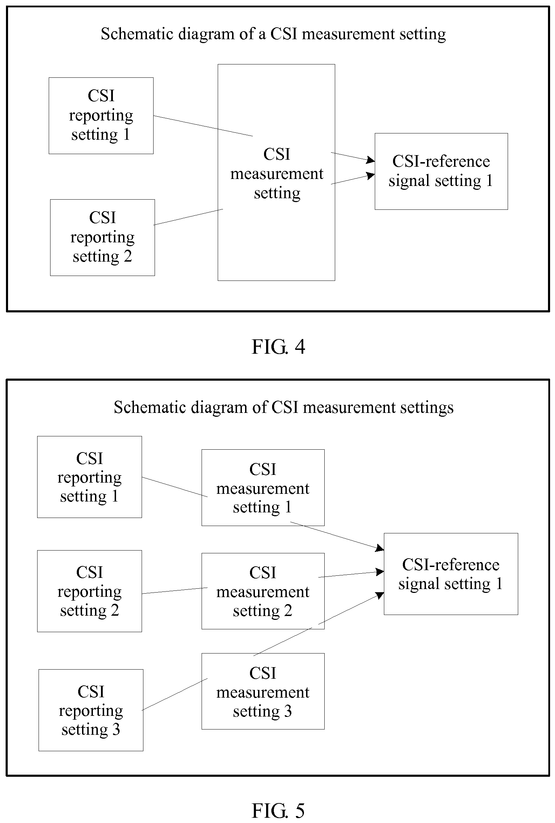

The following describes, by using examples, the method for setting channel state information measurement and reporting described in this embodiment of the present invention. Specifically, FIG. 4 is a schematic diagram of a CSI measurement setting according to an embodiment of the present invention. The network device sets one CSI measurement setting for the user equipment by using RRC signaling. The CSI measurement setting includes two CSI reporting settings (a CSI reporting setting 1 and a CSI reporting setting 2), one CSI-reference signal setting (a CSI-reference signal setting 1), and two transmission scheme settings. Specifically, two transmission schemes are the SM transmission scheme and the beam-based TxD transmission scheme. The CSI reporting setting 1 is set to measure and report aperiodic CSI supporting the SM transmission scheme, including a narrowband PMI and RI and a corresponding narrowband CQI. The narrowband PMI may be a Type I (low precision) PMI, or may be a Type II (high precision) PMI. The CSI reporting setting 2 is set to measure and report aperiodic (aperiodic) or semi-persistent (semi-persistent) CSI supporting the beam-based TxD transmission scheme, including a broadband PMI and RI and a corresponding broadband CQI. The CSI-reference signal setting 1 is set to a set of one or more CSI-reference signal resources and a corresponding aperiodic (aperiodic) or semi-persistent (semi-persistent) transmission manner. A CSI-reference signal resource set includes one or more CSI-reference signal resources. A CSI-reference signal resource includes at least one of a CSI-reference signal port quantity, a CSI-reference signal port number, a training sequence, an allocation manner for the training sequence on a resource element (English: resource Element, RE), and the like. A specific CSI-reference signal resource used by the user equipment for measurement may be indicated by using a MAC CE or DCI.

After receiving a CSI measurement setting 1, the user equipment performs channel estimation and measurement on a CSI-reference signal resource indicated by the CSI-reference signal resource setting 1, and respectively calculates, according to the CSI reporting setting 1 and the CSI reporting setting 2, the narrowband PMI and RI corresponding to the CSI reporting setting 1 and the corresponding narrowband CQI, and the broadband PMI and RI corresponding to the CSI reporting setting 2 and the corresponding broadband CQI. Then the network device instructs, by using MAC CE signaling, the user equipment to perform CSI measurement and reporting, for example, instructs the user equipment to report CSI corresponding to the SM transmission scheme indicated by the CSI reporting setting 1, or report CSI corresponding to the beam-based TxD transmission scheme indicated by the CSI reporting setting 2, or report CSI respectively corresponding to the SM transmission scheme indicated by the CSI reporting setting 1 and the beam-based TxD transmission scheme indicated by the CSI reporting setting 2.

FIG. 5 is a schematic diagram of another CSI measurement setting which is not covered by the claimed invention, but used to illustrate and enhance the understanding of the claimed invention. The network device sets three CSI measurement settings (a CSI measurement setting 1, a CSI measurement setting 2, and a CSI measurement setting 3) for the user equipment by using RRC signaling. Each CSI measurement setting includes one CSI reporting setting and one CSI-reference signal resource setting. Specifically, the CSI measurement setting 1 includes a CSI reporting setting 1 and a CSI-reference signal resource setting 1, the CSI measurement setting 2 includes a CSI reporting setting 2 and the CSI-reference signal resource setting 1, and the CSI measurement setting 3 includes a CSI reporting setting 3 and the CSI-reference signal resource setting 1.

The CSI reporting setting 1 is set to measure and report aperiodic CSI supporting the SM transmission scheme, including a narrowband PMI and RI and a corresponding narrowband CQI. The narrowband PMI may be a Type I (low precision) PMI, or may be a Type II (high precision) PMI. The CSI reporting setting 2 is set to measure and report aperiodic (aperiodic) or semi-persistent (semi-persistent) CSI supporting the beam-based TxD transmission scheme, including a broadband PMI and RI and a corresponding broadband CQI. The CSI reporting setting 3 is set to measure and report semi-persistent (semi-persistent) CSI supporting the beam-based TxD transmission scheme, including a broadband CQI. The CSI-reference signal resource setting 1 is set to a set of one or more CSI-reference signal resources and a corresponding aperiodic (aperiodic) or semi-persistent (semi-persistent) transmission manner. A CSI-reference signal resource set includes one or more CSI-reference signal resources. A CSI-reference signal resource includes a CSI-reference signal port quantity, a CSI-reference signal port number, a training sequence, an allocation manner for the training sequence on an RE, and the like. A specific CSI-reference signal resource used by the user equipment for measurement may be indicated by using a MAC CE or DCI.

After receiving a CSI measurement setting 1, a CSI measurement setting 2, and a CSI measurement setting 3, the user equipment performs channel estimation and measurement on a CSI-reference signal resource indicated by the CSI-reference signal resource setting 1, a CSI-reference signal resource setting 2, and a CSI-reference signal resource setting 3, and respectively calculates, according to the CSI reporting setting 1, the CSI reporting setting 2, and the CSI reporting setting 3, the narrowband PMI and RI corresponding to the CSI reporting setting 1 and the corresponding narrowband CQI, the broadband PMI and RI corresponding to the CSI reporting setting 2 and the corresponding broadband CQI, and the broadband CQI corresponding to the CSI reporting setting 3. Then the network device instructs, by using DCI signaling, the user equipment to perform CSI measurement and reporting, for example, instructs the user equipment to report CSI according to the CSI reporting setting 1, or report CSI according to the CSI reporting setting 2, or report CSI according to the CSI reporting setting 3, or report CSI in any two of the CSI reporting setting 1, the CSI reporting setting 2, and the CSI reporting setting 3, or report CSI in all of the CSI reporting setting 1, the CSI reporting setting 2, and the CSI reporting setting 3.

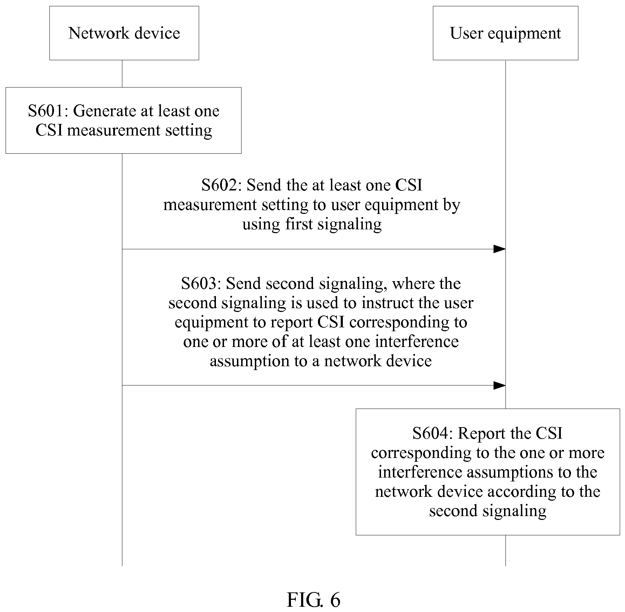

FIG. 6 is a schematic flowchart of another method for setting channel state information measurement and reporting according to an illustrative example not covered by the claimed invention and used to enhance the understanding of the invention. The method includes, but is not limited to, the following steps.

S601: A network device generates at least one CSI measurement setting. In this embodiment of the present invention, each of the at least one CSI measurement setting includes at least one CSI reporting setting, at least one CSI-reference signal setting, and at least one CSI interference measurement (English: Interference Measurement, IM) setting (CSI-IM setting). One of the at least one CSI reporting setting is corresponding to one or more of the at least one CSI-reference signal setting; or a plurality of the at least one CSI reporting setting are corresponding to one or more of the at least one CSI-reference signal setting. A plurality of CSI-reference signal resources respectively are corresponding to a plurality of network devices in a multi-network device coordinated transmission scheme. The at least one CSI interference measurement setting is used by user equipment to measure interference information of one or more network devices in the multi-network device coordinated transmission scheme, and the at least one CSI-reference signal setting and the at least one CSI interference measurement setting are used by the user equipment to measure CSI of the one or more network devices in at least one interference assumption.

One interference assumption may be corresponding to one CSI reporting setting, or a plurality of interference assumptions are corresponding to one CSI reporting setting. If one interference assumption is corresponding to one CSI reporting setting, a frequency granularity, a period attribute, and the like may be separately set for each of different interference assumptions, to implement a more flexible setting for CSI. If a plurality of interference assumptions are corresponding to one CSI reporting setting, same CSI is set for the plurality of interference assumptions.

The CSI reporting setting may include content (for example, a CQI, a PMI, an RI, and a CRI that are required in a particular transmission scheme in a particular transmission mode), a frequency domain granularity (for example, broadband or narrowband), and the like of CSI measurement and reporting, and may further include at least one of a period attribute (for example, periodicity and a period, or aperiodicity) and a subframe offset for CSI reporting.

Different CSI-reference signal settings are corresponding to different CSI-reference signal allocation and transmission manners. The CSI-reference signal setting may include a period attribute (for example, periodicity and a period) of CSI-reference signal transmission, a subframe offset, and the like, may also include a CSI-reference signal resource set definition (for example, a CSI-reference signal resource included in a set) and the like, and may further include CSI-reference signal resource information (for example, a CSI-reference signal port quantity, a CSI-reference signal port number, a training sequence, an allocation manner for the training sequence on a resource element (RE)), and the like.

Different CSI interference measurement settings are corresponding to different CSI interference measurement allocation and transmission manners. The CSI interference measurement setting may include a period attribute (for example, periodicity and a period) of zero power (English: Zero Power, ZP) or non-zero power (English: Non-Zero Power, NZP) CSI-reference signal transmission, a subframe offset, and the like, may also include a ZP or NZP CSI-RS resource set definition (for example, a ZP or NZP CSI-RS resource included in a set) and the like, and may further include ZP or NZP CSI-RS resource information (for example, a ZP or CSI-RS port quantity, a ZP or NZP CSI-RS port number, and an NZP CSI-RS training sequence setting) and the like. In one implementation, a CSI-IM setting includes only a ZP CSI-RS, and the ZP CSI-RS is used to measure interference power. In other words, an NZP CSI-RS is placed only in a CSI-RS setting, and a measurement result may be used as channel information, and may also be used as interference information. In another implementation, a CSI-IM setting includes a ZP CSI-RS and an NZP CSI-RS, the ZP CSI-RS is used to measure interference power, a measurement result obtained by using an NZP CSI-RS in a CSI-RS setting is used only as channel information, and a measurement result obtained by using the NZP CSI-RS in the CSI-IM setting is used only as interference information.

A CSI-reference signal resource indicated by the CSI-reference signal setting is used to measure channel information corresponding to one or more network devices. A CSI interference measurement resource indicated by the CSI interference measurement setting is used to measure interference information of one or more network devices in different interference assumptions. The CSI interference measurement resource may be a ZP CSI-reference signal resource or an NZP CSI-reference signal resource. The one or more NZP CSI-reference signal resources used to measure interference measurement and the one or more CSI-reference signal resources used to measure a channel may be a same CSI-reference signal resource. In this condition, the network device instructs, by using second signaling, the user equipment to perform measurement and reporting, for example, instructs the user equipment to report one or more pieces of CSI according to a particular interference measurement solution. The interference measurement setting is corresponding to one or more interference assumptions. Each interference assumption is corresponding to reporting of one piece of CSI, and reflects a signal transmission condition of each coordinating network device on a CSI-reference signal resource and a CSI interference measurement resource, and a consequent interference condition.

A CSI interference measurement resource is used to measure interference. CSI interference measurement is a ZP CSI-reference signal resource. To be specific, on the resource, a to-be-measured network device transmits no signal (ZP), but another network device transmits a signal. Accordingly, interfering signal power that is on the CSI interference measurement resource and that is of the another network device other than the to-be-measured network device can be obtained by measuring signal power on the CSI interference measurement resource. The user equipment may calculate a CQI in this interference assumption based on channel information (for example, a PMI) that is measured on a corresponding CSI-reference signal resource and that is of the to-be-measured network device, and the measured interfering signal power that is measured on the CSI interference measurement resource and that is of the another network device other than the to-be-measured network device.

S602: The network device sends the at least one CSI measurement setting to user equipment by using first signaling, and the user equipment receives the at least one CSI measurement setting that is sent by the network device by using the first signaling.

After receiving the at least one CSI measurement setting sent by the network device, the user equipment measures respective channel information of one or more network devices in the multi-network device coordinated transmission scheme on a reference signal resource indicated by a corresponding CSI-reference signal setting, and measures interference information on an interference measurement resource indicated by a corresponding CSI interference measurement setting.

S603: The network device sends second signaling to the user equipment, where the second signaling is used to instruct the user equipment to report CSI of the one or more network devices that is corresponding to one or more of the at least one interference assumption.

In this embodiment of the present invention, the network device instructs the user equipment to report the CSI of the one or more network devices that is corresponding to the one or more of the at least one interference assumption. The first signaling and the second signaling may be signaling at different layers. For example, the first signaling is RRC signaling, and the second signaling is MAC CE signaling; or the first signaling is RRC signaling, and the second signaling is DCI signaling; or the first signaling is MAC CE signaling, and the second signaling is DCI signaling. Alternatively, the first signaling and the second signaling may be signaling at a same layer. For example, first signaling is RRC signaling, and the second signaling is RRC signaling; or the first signaling is MAC CE signaling, and the second signaling is MAC CE signaling.

S604: The user equipment receives the second signaling sent by the network device, and reports the CSI corresponding to the one or more interference assumptions to the network device according to the second signaling.

The user equipment reports the CSI corresponding to the one or more of the at least one interference assumption, so that the network device learns CSI in a plurality of interference assumptions, and the network device performs coordinated transmission scheme selection, user scheduling, and the like based on the CSI.

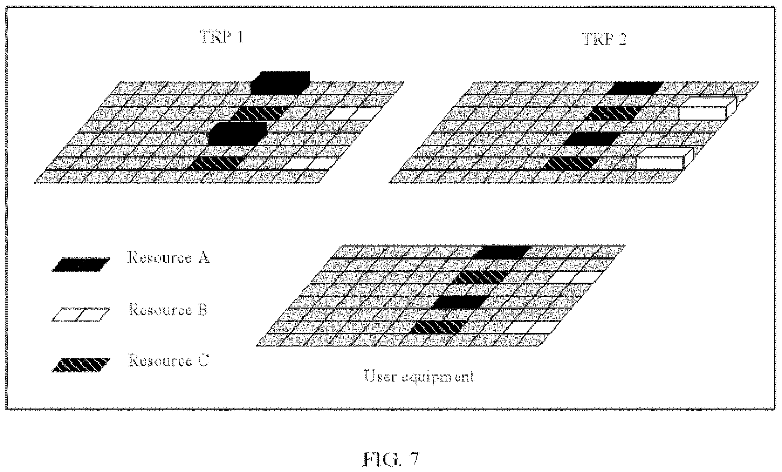

The following describes, by using examples, the method for setting channel state information measurement and reporting described in this embodiment of the present invention. Specifically, FIG. 7 is a schematic diagram of another CSI measurement setting according to an embodiment of the present invention. A network side sets one CSI measurement setting for the user equipment by using RRC signaling. The CSI measurement setting includes one CSI reporting setting, one CSI-reference signal resource setting, and one CSI interference measurement resource setting.

Specifically, the CSI reporting setting is set to measure and report aperiodic CSI supporting an SM transmission scheme, including a narrowband PMI and RI and a corresponding narrowband CQI. The narrowband PMI may be a Type I (low precision) PMI, or may be a Type II (high precision) PMI.

The CSI-reference signal resource setting is set to a set of one or more CSI-reference signal resources and a corresponding aperiodic (aperiodic) or semi-persistent (semi-persistent) transmission manner. A CSI-reference signal resource set includes one or more CSI-reference signal resources. A CSI-reference signal resource includes a CSI-reference signal port quantity, a CSI-reference signal port number, a training sequence, an allocation manner for the training sequence on an RE, and the like. A specific CSI-reference signal resource used by the user equipment for measurement is indicated by using a MAC CE or DCI. Specifically, for FIG. 6, the CSI-reference signal resource setting includes, but is not limited to: an NZP CSI-RS TRP 1: a resource (resource) A; and an NZP CSI-RS TRP 2: a resource B. The CSI interference measurement resource setting includes, but is not limited to: the NZP CSI-RS TRP 1: the resource A; the NZP CSI-RS TRP 2: the resource B; and a ZP CSI-RS: a resource C. Therefore, the user equipment performs channel estimation on the TRP 1 on the resource A, performs channel estimation on the TRP 2 on the resource B, and performs interference measurement rather than channel estimation on the resource C.

For example, for FIG. 7, the TRP 1 sets an NZP CSI-reference signal on the resource A, and therefore, the TRP 1 transmits a signal on the resource A; the TRP 1 sets a ZP CSI-reference signal on the resource B and the resource C, and therefore, the TRP 1 transmits no signal on the resource B and the resource C. The TRP 2 sets an NZP CSI-reference signal on the resource B, and therefore, the TRP 2 transmits a signal on the resource B; the TRP 2 sets a ZP CSI-reference signal on the resource A and the resource C, and therefore, the TRP 2 transmits no signal on the resource A and the resource C. An NZP CSI-reference signal is set for the user equipment on the resource A and the resource B, and therefore, the user equipment separately performs channel estimation on the resource A and the resource B. A ZP CSI-reference signal is set for the user equipment on the resource C, and therefore, the user equipment performs interference measurement rather than channel estimation on the resource C.

A CSI interference measurement resource is set to one or more CSI interference measurement resources or a resource set. A CSI interference measurement resource is a ZP CSI-reference signal resource. The TRP sends no signal on the ZP CSI-reference signal resource. For FIG. 7, the resource C is always set to a ZP CSI-reference signal for measurement interference, and therefore is a CSI interference measurement resource.

After receiving the CSI measurement setting, the user equipment completes channel estimation or interference measurement on a corresponding resource. For example, interference power of another TRP other than the TRP 1 and the TRP 2 is measured on the resource C (ZP CSI-reference signal). Channel information of the TRP 1 other than the TRP 2 and interference of the another TRP are measured on the resource A. Channel information of the TRP 2 other than the TRP 1 and interference of the another TRP are measured on the resource B.

Then the network device (assumed to be the TRP 1) instructs, by using DCI signaling, the UE to perform CSI/interference measurement and reporting. For example, CSI/interference required in a non-coherent joint transmission (NC-JT) scheme is measured. The network device instructs the user equipment to report CSI corresponding to one or more of the following four interference assumptions: 1. A PMI, an RI, and a CQI when the TRP 1 transmits a signal, the TRP 2 transmits no signal, and another TRP causes interference. In this case, the UE calculates the PMI/RI based on channel estimation on the resource A, and calculates the CQI by using measurement on the resource A as a signal part and using measurement on the resource C as an interference part. 2. A PMI, an RI, and a CQI when the TRP 2 transmits a signal, the TRP 1 transmits no signal, and another TRP causes interference. In this case, the UE calculates the PMI/RI based on channel estimation on the resource B, and calculates the CQI by using measurement on the resource B as a signal part and using measurement on the resource C as an interference part. 3. A PMI, an RI, and a CQI when the TRP 1 transmits a signal and another TRP causes interference. In this case, the UE calculates the PMI/RI based on channel estimation on the resource A, and calculates the CQI by using measurement on the resource A as a signal part and using measurement on the resource B as an interference part. 4. A PMI, an RI, and a CQI when the TRP 2 transmits a signal and another TRP causes interference. In this case, the UE calculates the PMI/RI based on channel estimation on the resource B, and calculates the CQI by using measurement on the resource B as a signal part and using measurement on the resource A as an interference part.

For another example, CSI/interference required in a dynamic point selection (DPS) transmission scheme is measured. The network device instructs the user equipment to report CSI corresponding to one or both of the following two interference assumptions: 1. A PMI, an RI, and a CQI when the TRP 1 transmits a signal and another TRP causes interference. In this case, the UE calculates the PMI/RI based on channel estimation on the resource A, and calculates the CQI by using measurement on the resource A as a signal part and using measurement on the resource B as an interference part. 2. A PMI, an RI, and a CQI when the TRP 2 transmits a signal and another TRP causes interference. In this case, the UE calculates the PMI/RI based on channel estimation on the resource B, and calculates the CQI by using measurement on the resource B as a signal part and using measurement on the resource A as an interference part.

For another example, CSI/interference required in a coherent joint transmission (Co-JT) scheme is measured. The network device instructs the user equipment to report CSI corresponding to one or more of the following three interference assumptions: 1. A PMI, an RI, and a CQI when the TRP 1 transmits a signal and another TRP causes interference. In this case, the UE calculates the PMI/RI based on channel estimation on the resource A, and calculates the CQI by using measurement on the resource A as a signal part and using measurement on the resource B as an interference part. 2. A PMI, an RI, and a CQI when the TRP 2 transmits a signal and another TRP causes interference. In this case, the UE calculates the PMI/RI based on channel estimation on the resource B, and calculates the CQI by using measurement on the resource B as a signal part and using measurement on the resource A as an interference part. 3. A PMI, an RI, and a CQI when the TRP 1 and the TRP 2 jointly transmit signals and another TRP causes interference. In this case, the UE calculates the PMI/RI based on channel estimation on the resource A and the resource B, and calculates the CQT by using measurement on the resource A and the resource B as a signal part and using measurement on the resource C as an interference part.

It should be noted that interference assumptions in the foregoing three transmission schemes are merely examples in this embodiment of the present invention, and do not constitute limitations on interference assumptions applicable to this embodiment of the present invention.

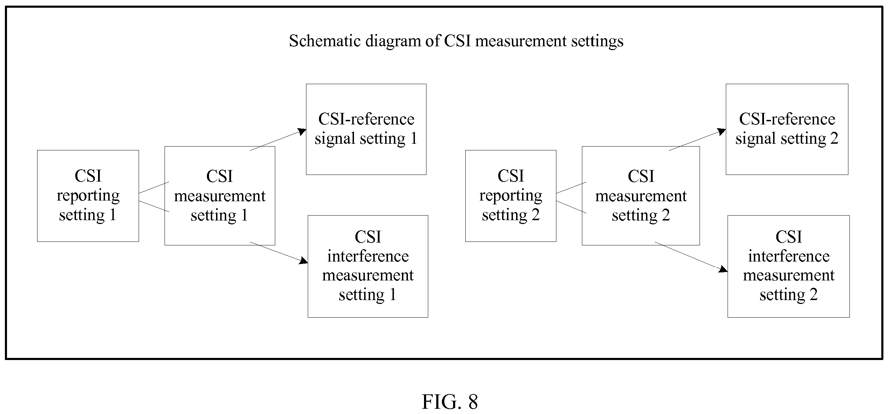

Alternatively, FIG. 8 is a schematic diagram of another CSI measurement setting according to an illustrative example not covered by the claimed invention and used to enhance the understanding of the invention. The network device sets two CSI measurement settings (a CSI measurement setting 1 and a CSI measurement setting 2) for the user equipment by using RRC signaling. The CSI measurement setting 1 is used to measure CSI of a coordinated transmission set 1 (including a TRP 1 and a TRP 2) shown in FIG. 2. The CSI measurement setting 2 is used to measure CSI of a coordinated transmission set 2 (including a TRP 3 and a TRP 4) shown in FIG. 2. The CSI measurement setting 1 includes a CSI reporting setting 1, a CSI-reference signal resource setting 1, and a CSI interference measurement resource setting 1. The CSI measurement setting 2 includes a CSI reporting setting 2, a CSI-reference signal resource setting 2, and a CSI interference measurement resource setting 2.

The CSI reporting setting 1 is set to measure and report aperiodic CSI supporting an SM transmission scheme, including a narrowband PMI and RI and a corresponding narrowband CQI. The narrowband PMI may be a Type I PMI, or may be a Type II PMI. The CSI interference measurement resource setting 1 is set to one or more CSI interference measurement resources or a resource set. The CSI-reference signal resource setting 1 is set to a set of one or more CSI-reference signal resources and a corresponding aperiodic or semi-persistent transmission manner. A CSI-reference signal resource set includes one or more CSI-reference signal resources. A CSI-reference signal resource includes a CSI-reference signal port quantity, a CSI-reference signal port number, a training sequence, an allocation manner for the training sequence on an RE, and the like. A specific CSI-reference signal resource used by the user equipment for measurement is indicated by using a MAC CE or DCI.

The CSI reporting setting 2 is set to measure and report aperiodic or semi-persistent CSI supporting a beam-based TxD transmission scheme, including a broadband PMI and RI and a corresponding broadband CQI. The CSI interference measurement resource setting 2 is set to one or more CSI interference measurement resources or a resource set. The CSI-reference signal resource setting 2 is set to a set of one or more CSI-reference signal resources and a corresponding aperiodic or semi-persistent transmission manner. A CSI-reference signal resource set includes one or more CSI-reference signal resources. A CSI-reference signal resource includes a CSI-reference signal port quantity, a CSI-reference signal port number, a training sequence, an allocation manner for the training sequence on an RE, and the like. A specific CSI-reference signal resource used by the user equipment for measurement is indicated by using a MAC CE or DCI.

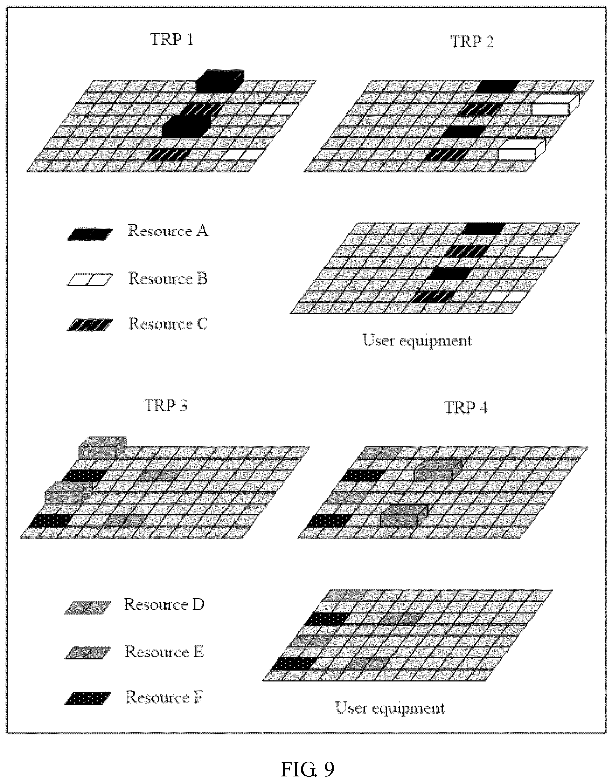

For example, for FIG. 9, the TRP 1 sets an NZP CSI-reference signal on a resource A, and sets a ZP CSI-reference signal on a resource B and a resource C. The TRP 2 sets an NZP CSI-reference signal on the resource B, and sets a ZP CSI-reference signal on the resource A and the resource C. An NZP CSI-reference signal is set for the user equipment on the resource A and the resource B, and a ZP CSI-reference signal is set for the user equipment on the resource C.

The TRP 3 sets an NZP CSI-reference signal on a resource D, and sets a ZP CSI-reference signal on a resource E and a resource F. The TRP 4 sets an NZP CSI-reference signal on the resource E, and sets a ZP CSI-reference signal on the resource D and the resource F. An NZP CSI-reference signal is set for the user equipment on the resource D and the resource E, and a ZP CSI-reference signal is set for the user equipment on the resource F.

For FIG. 9, the resource C and the resource F are always set to a ZP CSI-reference signal for measurement interference, and therefore are CSI interference measurement resources.

After receiving the CSI measurement setting, the user equipment completes channel estimation or interference measurement on a corresponding resource. For example, for the CSI reporting setting 1, interference power of another TRP other than the TRP 1 and the TRP 2 is measured on the resource C (ZP CSI-reference signal). Channel information of the TRP 1 other than the TRP 2 and interference of the another TRP are measured on the resource A. Channel information of the TRP 2 other than the TRP 1 and interference of the another TRP are measured on the resource B. For the CSI reporting setting 2, interference power of another TRP other than the TRP 3 and the TRP 4 is measured on the resource F (ZP CSI-reference signal). Channel information of the TRP 3 other than the TRP 4 and interference of the another TRP are measured on the resource D. Channel information of the TRP 4 other than the TRP 3 and interference of the another TRP are measured on the resource E.

Then the network device (assumed to be the TRP 1) instructs, by using DCI signaling, the UE to perform CSI/interference measurement and reporting. For example, CSI/interference required in a non-coherent joint transmission (NC-JT) scheme is measured, and one or more of the following information need to be reported: 1. A PMI, an RI, and a CQI when the TRP 1 transmits a signal, the TRP 2 transmits no signal, and another TRP causes interference. The user equipment calculates the PMI/RI based on channel estimation on the resource A, and calculates the CQI by using measurement on the resource A as a signal part and using measurement on the resource C as an interference part. 2. A PMI, an RI, and a CQI when the TRP 2 transmits a signal, the TRP 1 transmits no signal, and another TRP causes interference. The user equipment calculates the PMI/RI based on channel estimation on the resource B, and calculates the CQI by using measurement on the resource B as a signal part and using measurement on the resource C as an interference part. 3. A PMI, an RI, and a CQI when the TRP 1 transmits a signal and another TRP causes interference. The user equipment calculates the PMI/RI based on channel estimation on the resource A, and calculates the CQI by using measurement on the resource A as a signal part and using measurement on the resource B as an interference part. 4. A PMI, an RI, and a CQI when the TRP 2 transmits a signal and another TRP causes interference. The user equipment calculates the PMI/RI based on channel estimation on the resource B, and calculates the CQI by using measurement on the resource B as a signal part and using measurement on the resource A as an interference part. 5. A PMI, an RI, and a CQI when the TRP 3 transmits a signal, the TRP 4 transmits no signal, and another TRP causes interference. The user equipment calculates the PMI/RI based on channel estimation on the resource D, and calculates the CQI by using measurement on the resource D as a signal part and using measurement on the resource F as an interference part. 6. A PMI, an RI, and a CQI when the TRP 4 transmits a signal, the TRP 3 transmits no signal, and another TRP causes interference. The user equipment calculates the PMI/RI based on channel estimation on the resource E, and calculates the CQI by using measurement on the resource E as a signal part and using measurement on the resource F as an interference part. 7. A PMI, an RI, and a CQI when the TRP 3 transmits a signal and another TRP causes interference. The user equipment calculates the PMI/RI based on channel estimation on the resource D, and calculates the CQI by using measurement on the resource D as a signal part and using measurement on the resource E as an interference part. 8. A PMI, an RI, and a CQI when the TRP 4 transmits a signal and another TRP causes interference. The user equipment calculates the PMI/RI based on channel estimation on the resource E, and calculates the CQI by using measurement on the resource E as a signal part and using measurement on the resource D as an interference part.

For another example, CSI/interference required in a dynamic point selection (DPS) transmission scheme is measured, and one or more of the following information need to be reported: 1. A PMI, an RI, and a CQI when the TRP 1 transmits a signal and another TRP causes interference. In this case, the UE calculates the PMI/RI based on channel estimation on the resource A, and calculates the CQI by using measurement on the resource A as a signal part and using measurement on the resource B as an interference part. 2. A PMI, an RI, and a CQI when the TRP 2 transmits a signal and another TRP causes interference. In this case, the UE calculates the PMI/RI based on channel estimation on the resource B, and calculates the CQI by using measurement on the resource B as a signal part and using measurement on the resource A as an interference part. 3. A PMI, an RI, and a CQI when the TRP 3 transmits a signal and another TRP causes interference. The user equipment calculates the PMI/RI based on channel estimation on the resource D, and calculates the CQI by using measurement on the resource D as a signal part and using measurement on the resource E as an interference part. 4. A PMI, an RI, and a CQI when the TRP 4 transmits a signal and another TRP causes interference. The user equipment calculates the PMI/RI based on channel estimation on the resource E, and calculates the CQI by using measurement on the resource E as a signal part and using measurement on the resource D as an interference part.

For another example, CSI/interference required in a coherent joint transmission (Co-JT) scheme is measured, and one or more of the following information need to be reported: 1. A PMI, an RI, and a CQI when the TRP 1 transmits a signal and another TRP causes interference. In this case, the UE calculates the PMI/RI based on channel estimation on the resource A, and calculates the CQI by using measurement on the resource A as a signal part and using measurement on the resource B as an interference part. 2. A PMI, an RI, and a CQI when the TRP 2 transmits a signal and another TRP causes interference. In this case, the UE calculates the PMI/RI based on channel estimation on the resource B, and calculates the CQI by using measurement on the resource B as a signal part and using measurement on the resource A as an interference part. 3. A PMI, an RI, and a CQI when the TRP 1 and the TRP 2 jointly transmit signals and another TRP causes interference. In this case, the UE calculates the PMI/RI based on channel estimation on the resource A and the resource B, and calculates the CQI by using measurement on the resource A and the resource B as a signal part and using measurement on the resource C as an interference part.4. A PMI, an RI, and a CQI when the TRP 3 transmits a signal and another TRP causes interference. The user equipment calculates the PMI/RI based on channel estimation on the resource D, and calculates the CQI by using measurement on the resource D as a signal part and using measurement on the resource E as an interference part. 5. A PMI, an RI, and a CQI when the TRP 4 transmits a signal and another TRP causes interference. The user equipment calculates the PMI/RI based on channel estimation on the resource E, and calculates the CQI by using measurement on the resource E as a signal part and using measurement on the resource D as an interference part. 6. A PMI, an RI, and a CQI when the TRP 3 and the TRP 4 jointly transmit signals and another TRP causes interference. The user equipment calculates the PMI/RI based on channel estimation on the resource D and the resource E, and calculates the CQI by using measurement on the resource D and the resource E as a signal part and using measurement on the resource F as an interference part.

In conclusion, by implementing this illustrative example not covered by the claimed invention and used to enhance the understanding of the invention, the network device may set one or more measurement settings for the user equipment by delivering signaling once. Each measurement setting may be corresponding to one or more CSI reporting settings, one or more CSI-reference signal settings, and one or more CSI interference measurement settings, different CSI reporting settings may be corresponding to different transmission schemes, different CSI-reference signal settings are corresponding to resources on which CSI-reference signals of different network devices are located, and different CSI interference measurement settings are corresponding to different CSI interference measurement allocation and transmission manners. Compared with a prior-art manner in which if user equipment needs to measure CSI in different interference conditions, a network device needs to set, by using different RRC signaling, CSI reporting corresponding to different network devices, in this embodiment of the present invention, signaling delivery times of the network device can be reduced, to reduce signaling overheads while switching the user equipment between different transmission schemes and supporting CSI measurement and reporting that are required in multi-network device coordinated transmission.

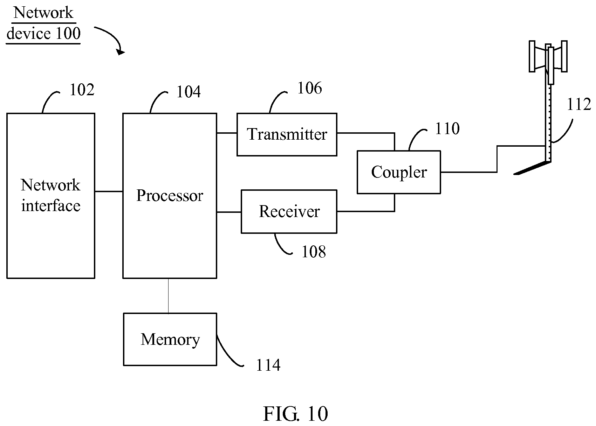

Based on a same invention concept, an embodiment of the present invention further provides a network device. The network device is configured to implement the method described in the embodiment of FIG. 3. As shown in FIG. 10, the network device 100 may include: a network interface 102, a processor 104, a transmitter 106, a receiver 108, a coupler 110, an antenna 112, and a memory 114. The transmitter 106 is configured to send a signal to another communications device. The receiver 108 is configured to receive a signal sent by the another communications device. The coupler 110 is connected to the transmitter 106 and the receiver 108, and may be configured to split the sent signal and the received signal. The antenna 112 is connected to a front end of the coupler 110, and may be configured to transmit an electromagnetic signal to external space or receive an electromagnetic signal from an external environment. The memory 114 is coupled to the processor 104, and is configured to store various software programs and/or a plurality of instructions. During specific implementation, the memory 104 may include a high-speed random access memory, and may also include a non-volatile memory, for example, one or more magnetic disk storage devices, flash memory devices, or other non-volatile solid-state storage devices.

Specifically, for a first solution shown in FIG. 3, the processor 104 in the network device 100 may invoke program code stored in the memory 114, to perform the following operation: generating at least one channel state information CSI measurement setting, as defined by claim 1, and the CSI-reference signal setting is used by user equipment to measure CSI respectively corresponding to the at least two transmission schemes; the transmitter 106 is configured to send the at least one CSI measurement setting to the user equipment by using first signaling; and the transmitter 106 is further configured to send second signaling to the user equipment, where the second signaling is used to instruct the user equipment to report CSI corresponding to one or more of the two transmission schemes to the network device.

In this embodiment of the present invention, the first signaling is radio resource control RRC signaling, and the second signaling is media access control control element MAC CE signaling; or the first signaling is RRC signaling, and the second signaling is downlink control information DCI signaling; or the first signaling is MAC CE signaling, and the second signaling is DCI signaling. In addition, timing, a manner, and a device for sending the first signaling may be set according to a specific requirement. The scope of this embodiment of the present invention is not limited to the foregoing specific example.

In this embodiment of the present invention, the CSI reporting setting includes at least one of content and a frequency domain granularity of CSI measurement and reporting and a period attribute and a subframe offset for CSI reporting; and the content of CSI measurement and reporting includes at least one of a channel quality indicator CQI, a precoding matrix indicator PMI, a rank indicator RI, and a reference signal resource indicator CRI.

In this embodiment of the present invention, the CSI-reference signal setting includes at least one of a period attribute of CSI-reference signal transmission, a subframe offset, a CSI-reference signal set, and CSI-reference signal resource information; and the CSI-reference signal resource information includes at least one of a CSI-reference signal port quantity, a CSI-reference signal port number, and a training sequence setting.

It should be noted that, for content that is not mentioned in the embodiment of FIG. 10, refer to the embodiment of FIG. 3 and the foregoing content. Details are not described herein again.

During actual application, the network device 100 may be the network device in FIG. 1, and may be configured to allocate a reference signal resource to user equipment.

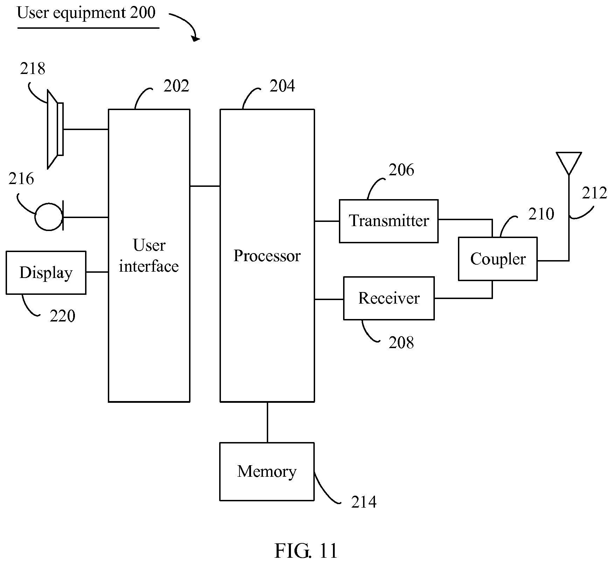

As shown in FIG. 11, the user equipment 200 may include: a network interface 202, a processor 204, a transmitter 206, a receiver 208, a coupler 210, an antenna 212, and a memory 214. The transmitter 206 is configured to send a signal to another communications device (for example, a base station). The receiver 208 is configured to receive a signal sent by the another communications device (for example, the base station). The coupler 210 is connected to the transmitter 206 and the receiver 208, and may be configured to split the sent signal and the received signal. The antenna 212 is connected to a front end of the coupler 210, and may be configured to transmit an electromagnetic signal to external space or receive an electromagnetic signal from an external environment. The memory 214 is coupled to the processor 204, and is configured to store various software programs and/or a plurality of instructions. During specific implementation, the memory 204 may include a high-speed random access memory, and may also include a non-volatile memory, for example, one or more magnetic disk storage devices, flash memory devices, or other non-volatile solid-state storage devices.

Optionally, the user equipment 200 may further include some input/output devices, for example, an audio input/output circuit 218, a sensor 216, and a display 220, to interact with a user, and receive a user input or output feedback to the user.

Specifically, for a first solution shown in FIG. 3, the receiver 208 is configured to receive first signaling sent by a network device, where the first signaling defined by claim 4; the processor 204 is configured to measure, based on one CSI-reference signal setting, CSI respectively corresponding to the two or more transmission schemes; the receiver 208 is further configured to receive second signaling sent by the network device; and the transmitter 206 is configured to report CSI corresponding to one or more of the at least two transmission schemes to the network device according to the second signaling.

In this embodiment of the present invention, the first signaling is RRC signaling, and the second signaling is MAC CE signaling; or the first signaling is RRC signaling, and the second signaling is DCI signaling; or the first signaling is MAC CE signaling, and the second signaling is DCI signaling.

In this embodiment of the present invention, the CSI reporting setting includes at least one of content and a frequency domain granularity of CSI measurement and reporting and a period attribute and a subframe offset for CSI reporting; and the content of CSI measurement and reporting includes at least one of a channel quality indicator CQI, a precoding matrix indicator PMI, a rank indicator RI, and a reference signal resource indicator CRI.

In this embodiment of the present invention, the CSI-reference signal setting includes at least one of a period attribute of CSI-reference signal transmission, a subframe offset, and CSI-reference signal resource information; and the CSI-reference signal resource information includes at least one of a CSI-reference signal port quantity, a CSI-reference signal port number, and a training sequence setting.

It should be noted that, for content that is not mentioned in the embodiment of FIG. 11, refer to the embodiment of FIG. 3 and the foregoing content. Details are not described herein again.

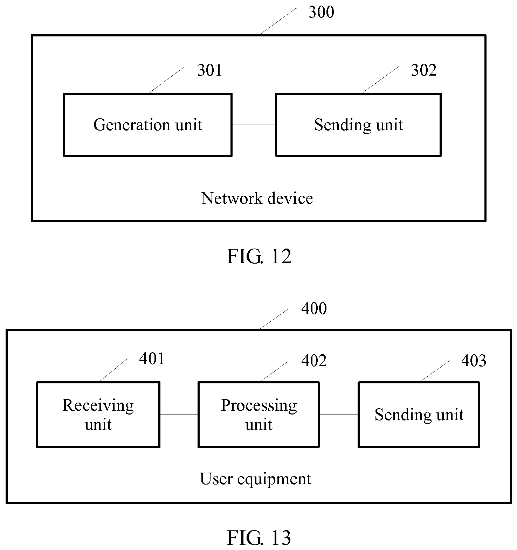

Based on a same invention concept, an embodiment of the present invention further provides a network device. The network device is configured to implement the method described in the embodiment of FIG. 3. As shown in FIG. 12, the network device 300 may include: a generation unit 301 and a sending unit 302.

For the embodiment shown in FIG. 3, the generation unit 301 is configured to generate at least one channel state information CSI measurement setting,as defined by claim 1, the at least two CSI reporting settings are corresponding to at least two transmission schemes, and the CSI-reference signal setting is used by user equipment to measure CSI respectively corresponding to the at least two transmission schemes; the sending unit 302 is configured to send the at least one CSI measurement setting to the user equipment by using first signaling; and
the sending unit 303 is further configured to send second signaling to the user equipment, where the second signaling is used to instruct the user equipment to report CSI corresponding to one or more of the at least one transmission scheme to the network device.

In this embodiment of the present invention, the first signaling is radio resource control RRC signaling, and the second signaling is media access control control element MAC CE signaling; or the first signaling is RRC signaling, and the second signaling is downlink control information DCI signaling; or the first signaling is MAC CE signaling, and the second signaling is DCI signaling.

In this embodiment of the present invention, the CSI reporting setting includes at least one of content and a frequency domain granularity of CSI measurement and reporting and a period attribute and a subframe offset for CSI reporting; and the content of CSI measurement and reporting includes at least one of a channel quality indicator CQI, a precoding matrix indicator PMI, a rank indicator RI, and a reference signal resource indicator CRI.

In this embodiment of the present invention, the CSI-reference signal setting includes at least one of a period attribute of CSI-reference signal transmission, a subframe offset, a CSI-reference signal set, and CSI-reference signal resource information; and the CSI-reference signal resource information includes at least one of a CSI-reference signal port quantity, a CSI-reference signal port number, and a training sequence setting.

It should be noted that, for specific implementation of the function modules in the network device 300, refer to the embodiment of FIG. 3 and the foregoing content. Details are not described herein again.

During actual application, the network device 300 may be the network device in FIG. 1, and may be configured to allocate a reference signal resource to user equipment. During actual application, the network device 300 may alternatively be another network entity, for example, a management node corresponding to a plurality of groups of transceiver points. This is not limited herein.

Based on a same invention concept, an embodiment of the present invention further provides user equipment. As shown in FIG. 13, the user equipment 400 may include: a receiving unit 401, a processing unit 402, and a sending unit 403.

For the embodiment shown in FIG. 3, the receiving unit 401 may be configured to receive first signaling sent by a network device, where the first signaling includes at least one channel state information CSI measurement setting, as defined by claim 4, and the CSI-reference signal setting is used by the user equipment to measure CSI respectively corresponding to the at least two transmission schemes;
the processing unit 402 is configured to measure, based on the at least one CSI-reference signal setting, CSI respectively corresponding to the two or more transmission schemes;
the receiving unit 401 is further configured to receive second signaling sent by the network device; and
the sending unit 403 is configured to report CSI corresponding to one or more of the at least two transmission schemes to the network device according to the second signaling.

In this embodiment of the present invention, the first signaling is radio resource control RRC signaling, and the second signaling is media access control control element MAC CE signaling; or the first signaling is RRC signaling, and the second signaling is downlink control information DCI signaling; or the first signaling is MAC CE signaling, and the second signaling is DCI signaling.

In this embodiment of the present invention, the CSI reporting setting includes at least one of content and a frequency domain granularity of CSI measurement and reporting and a period attribute and a subframe offset for CSI reporting; and the content of CSI measurement and reporting includes at least one of a channel quality indicator CQI, a precoding matrix indicator PMI, a rank indicator RI, and a reference signal resource indicator CRI.

In this embodiment of the present invention, the CSI-reference signal setting includes at least one of a period attribute of CSI-reference signal transmission, a subframe offset, and CSI-reference signal resource information; and the CSI-reference signal resource information includes at least one of a CSI-reference signal port quantity, a CSI-reference signal port number, and a training sequence setting.

It should be noted that, for specific implementation of the function modules in the user equipment 400, refer to the embodiment of FIG. 3 and the foregoing content. Details are not described herein again.

In some embodiments, the network device may be the network device 100 described in the embodiment of FIG. 10, and the user equipment may be the user equipment 200 described in the embodiment of FIG. 11. In some embodiments, alternatively, the network device may be the network device 300 described in the embodiment of FIG. 12, and the user equipment may be the user equipment 400 described in the embodiment of FIG. 13. It should be noted that, alternatively, the network device may be the network device described in all of the foregoing content, and the user equipment may be the user equipment described in all of the foregoing content.

A person of ordinary skill in the art may understand that all or some of the steps of the method embodiments may be implemented by a program instructing related hardware. The program may be stored in a computer-readable storage medium. When the program runs, the steps of the foregoing method embodiments are performed. The storage medium includes various media that can store program code, such as a read-only memory (English: Read-Only Memory, ROM for short), a random access memory (English: Random Access Memory, RAM for short), a magnetic disk, or an optical disc.

## Claims

1. A method for setting channel state information measurement and reporting, comprising:
• generating, by a network device, at least one channel state information, CSI, measurement setting,
wherein each of the at least one CSI measurement setting comprises:
o a first CSI reporting setting corresponding to a first transmission scheme and a second CSI reporting setting corresponding to a second transmission scheme, the first transmission scheme being different to the second transmission scheme, the second CSI reporting setting being provided in addition to the first CSI reporting setting, wherein the first transmission scheme is a spatial multiplexing, SM, transmission scheme and the second transmission scheme is a beam-based transmit diversity, TxD, transmission scheme, and
∘ one CSI-reference signal setting, and the CSI-reference signal setting is used by user equipment to measure CSI respectively corresponding to the first and second transmission scheme;
• sending, by the network device, the at least one CSI measurement setting to the user equipment by using first signaling (S 302); and
• sending, by the network device, second signaling to the user equipment, wherein the second signaling is used to instruct the user equipment to report CSI, among the CSI measured by the terminal, corresponding to one or more of the two transmission schemes to the network device (S 304).

2. The method according to claim 1, wherein each CSI reporting setting among the first and second CSI reporting setting comprises at least one of content and a frequency domain granularity of CSI measurement and reporting and a period attribute and a subframe offset for CSI reporting; and the content of CSI measurement and reporting comprises at least one of a channel quality indicator, CQI, a precoding matrix indicator, PMI, a rank indicator, RI, and a reference signal resource indicator, CRI.

3. The method according to claim 1 or 2, wherein the CSI-reference signal setting comprises at least one of a period attribute of CSI-reference signal transmission, a subframe offset, a CSI-reference signal set, and CSI-reference signal resource information; and the CSI-reference signal resource information comprises at least one of a CSI-reference signal port quantity, a CSI-reference signal port number, and a training sequence setting.

4. A method for setting channel state information measurement and reporting, comprising:
• receiving, by a user equipment, first signaling sent by a network device (S 302), wherein the first signaling comprises at least one channel state information, CSI, measurement setting, wherein each of the at least one CSI measurement setting comprises:
o a first CSI reporting setting corresponding to a first transmission scheme and a second CSI reporting setting corresponding to a second transmission scheme, the first transmission scheme being different to the second transmission scheme, the second CSI reporting setting being provided in addition to the first CSI reporting setting, wherein the first transmission scheme is a spatial multiplexing, SM, transmission scheme and the second transmission scheme is a beam-based transmit diversity, TxD, transmission scheme, and
∘ one CSI-reference signal setting, and the CSI-reference signal setting is used by the user equipment to measure CSI respectively corresponding to the first and second transmission scheme;
• measuring, by the user equipment based on the at least one CSI-reference signal setting, the CSI respectively corresponding to the first and second transmission schemes (S 303);
• receiving, by the user equipment, second signaling sent by the network device (S 304); and
• reporting, by the user equipment, CSI, among the measured CSI, corresponding to one or more of the first and second transmission scheme to the network device according to the second signaling (S 305).

5. The method according to claim 4, wherein each CSI reporting setting among the first and second CSI reporting setting comprises at least one of content and a frequency domain granularity of CSI measurement and reporting and a period attribute and a subframe offset for CSI reporting; and the content of CSI measurement and reporting comprises at least one of a channel quality indicator CQI, a precoding matrix indicator PMI, a rank indicator RI, and a reference signal resource indicator CRI.

6. The method according to claim 4 or 5, wherein the CSI-reference signal setting comprises at least one of a period attribute of CSI-reference signal transmission, a subframe offset, and CSI-reference signal resource information; and the CSI-reference signal resource information comprises at least one of a CSI-reference signal port quantity, a CSI-reference signal port number, and a training sequence setting.

7. A network device configured to perform any of the methods according to claims 1 - 3.

## Patentansprüche

1. Verfahren zum Einstellen einer Kanalzustandsinformationenmessung und - berichterstellung, das Folgendes umfasst:
• Erzeugen, durch eine Netzwerkvorrichtung, wenigstens einer Kanalzustandsinformationen(*channel state information* - CSI)-Messungseinstellung, wobei jede der wenigstens einen CSI-Messungseinstellung Folgendes umfasst:
o eine erste CSI-Berichterstellungseinstellung, die einem ersten Übertragungsschema entspricht, und eine zweite CSI-Berichterstellungseinstellung, die einem zweiten Übertragungsschema entspricht, wobei das erste Übertragungsschema sich von dem zweiten Übertragungsschema unterscheidet, wobei die zweite CSI-Berichterstellungseinstellung zusätzlich zu der ersten CSI-Berichterstellungseinstellung bereitgestellt wird, wobei das erste Übertragungsschema ein Raummultiplex(*spatial multiplexing* - SM)-Übertragungsschema und das zweite Übertragungsschema ein strahlbasiertes Übertragediversitäts(*transmit diversity* - TxD)-Übertragungsschema ist, und
o eine CSI-Referenzsignaleinstellung, und wobei die CSI-Referenzsignaleinstellung durch eine Benutzereinrichtung verwendet wird, um CSI zu messen, die dem ersten beziehungsweise dem zweiten Übertragungsschema entsprechen;
• Senden, durch die Netzwerkvorrichtung, der wenigstens einen CSI-Messungseinstellung an die Benutzereinrichtung durch Verwenden einer ersten Signalisierung (S 302); und
• Senden, durch die Netzwerkvorrichtung, einer zweiten Signalisierung an die Benutzereinrichtung, wobei die zweite Signalisierung verwendet wird, um die Benutzereinrichtung anzuweisen, CSI unter den CSI, die durch das Endgerät gemessen werden, die einem oder mehreren der zwei Übertragungsschemas entsprechen, der Netzwerkvorrichtung zu berichten (S 304).

2. Verfahren nach Anspruch 1, wobei jede CSI-Berichterstellungseinstellung unter der ersten und der zweiten CSI-Berichterstellungseinstellung eine Inhalts- und eine Frequenzbereichsgranularität der CSI-Messung und -Berichterstellung und/oder ein Periodenattribut und einen Unterrahmenversatz für die CSI-Berichterstellung umfasst; und der Inhalt der CSI-Messung und -Berichterstellung ein Kanalqualitätskennzeichen (*channel quality indicator-* CQI), ein Vorcodierungsmatrixkennzeichen (*precoding matrix indicator-* PMI), ein Rangkennzeichen (*rank indicator-* RI) und/oder ein Referenzsignalressourcenkennzeichen (*reference signal resource indicator-* CRI) umfasst.

3. Verfahren nach Anspruch 1 oder 2, wobei die CSI-Referenzsignaleinstellung ein Periodenattribut der CSI-Referenzsignalübertragung, einen Unterrahmenversatz, einen CSI-Referenzsignalsatz und/oder CSI-Referenzsignalressourceninformationen umfasst; und die CSI-Referenzsignalressourceninformationen eine CSI-Referenzsignalportmenge, eine CSI-Referenzsignalportnummer und/oder eine Trainingssequenzeinstellung umfassen.

4. Verfahren zum Einstellen einer Kanalzustandsinformationenmessung und - berichterstellung, das Folgendes umfasst:
• Empfangen, durch eine Benutzereinrichtung, einer ersten Signalisierung, die durch eine Netzwerkvorrichtung gesendet wird (S 302), wobei die erste Signalisierung wenigstens eine Kanalzustandsinformationen(CSI)-Messungseinstellung umfasst, wobei jede der wenigstens einen CSI-Messungseinstellung Folgendes umfasst:
o eine erste CSI-Berichterstellungseinstellung, die einem ersten Übertragungsschema entspricht, und eine zweite CSI-Berichterstellungseinstellung, die einem zweiten Übertragungsschema entspricht, wobei das erste Übertragungsschema sich von dem zweiten Übertragungsschema unterscheidet, wobei die zweite CSI-Berichterstellungseinstellung zusätzlich zu der ersten CSI-Berichterstellungseinstellung bereitgestellt wird, wobei das erste Übertragungsschema ein Raummultiplex(SM)-Übertragungsschema und das zweite Übertragungsschema ein strahlbasiertes Übertragediversitäts(TxD)-Übertragungsschema ist, und
o eine CSI-Referenzsignaleinstellung, und wobei die CSI-Referenzsignaleinstellung durch die Benutzereinrichtung verwendet wird, um CSI zu messen, die dem ersten beziehungsweise dem zweiten Übertragungsschema entsprechen;
• Messen, durch die Benutzereinrichtung basierend auf der wenigstens einen CSI-Referenzsignaleinstellung, der CSI, die dem ersten beziehungsweise dem zweiten Übertragungsschema entsprechen (S 303);
• Empfangen, durch die Benutzereinrichtung, einer zweiten Signalisierung, die durch die Netzwerkvorrichtung gesendet wird (S 304); und
• Berichten, durch die Benutzereinrichtung, der CSI unter den gemessenen CSI, die dem ersten und/oder zweiten Übertragungsschema entsprechen, an die Netzwerkvorrichtung gemäß der zweiten Signalisierung (S 305).

5. Verfahren nach Anspruch 4, wobei jede CSI-Berichterstellungseinstellung unter der ersten und der zweiten CSI-Berichterstellungseinstellung eine Inhalts- und eine Frequenzbereichsgranularität der CSI-Messung und -Berichterstellung und/oder ein Periodenattribut und einen Unterrahmenversatz für die CSI-Berichterstellung umfasst; und der Inhalt der CSI-Messung und -Berichterstellung ein Kanalqualitätskennzeichen (CQI), ein Vorcodierungsmatrixkennzeichen (PMI), ein Rangkennzeichen (RI) und/oder eine Referenzsignalressourcenkennzeichen (CRI).

6. Verfahren nach Anspruch 4 oder 5, wobei die CSI-Referenzsignaleinstellung ein Periodenattribut der CSI-Referenzsignalübertragung, einen Unterrahmenversatz und/oder CSI-Referenzsignalressourceninformationen umfasst; und die CSI-Referenzsignalressourceninformationen eine CSI-Referenzsignalportmenge, eine CSI-Referenzsignalportnummer und/oder eine Trainingssequenzeinstellung umfassen.

7. Netzwerkvorrichtung, die konfiguriert ist, um eines der Verfahren nach den Ansprüchen 1-3 durchzuführen.

## Revendications

1. Procédé destiné à l'établissement d'une mesure et d'un rapport des informations d'état de canal, comprenant :
• la génération, par un dispositif réseau, d'au moins un établissement de mesure des informations d'état de canal, CSI, dans lequel chacun de l'au moins un établissement de mesure de CSI comprend :
o un premier établissement de rapport de CSI correspondant à un premier schéma de transmission et un second établissement de rapport de CSI correspondant à un second schéma de transmission, le premier schéma de transmission étant différent du second schéma de transmission, le second établissement de rapport de CSI étant fourni en plus du premier établissement de rapport de CSI, dans lequel le premier schéma de transmission est un schéma de transmissionde multiplexage spatial, SM, et le second schéma de transmission est un shcéma de transmission de diversité d'émission basée sur le faisceau, TxD, et
o un établissement de signal de référence de CSI, et l'établissement de signal de référence de CSI est utilisé par l'équipement d'utilisateur pour mesurer le CSI correspondant respectivement au premier et au second schéma de transmission ;
• l'envoi, par le dispositif réseau, de l'au moins un établissement de mesure de CSI à l'équipement d'utilisateur à l'aide d'une première signalisation (S 302) ; et
• l'envoi, par le dispositif réseau, d'une seconde signalisation à l'équipement d'utilisateur, la seconde signalisation étant utilisée pour ordonner à l'équipement d'utilisateur de signaler le CSI, parmi les CSI mesurés par le terminal, correspondant à un ou plusieurs des deux schémas de transmission au dispositif réseau (S 304).

2. Procédé selon la revendication 1, dans lequel chaque établissement de rapport de CSI parmi le premier et le second établissement de rapport de CSI comprend le contenu et une granularité de domaine de fréquence de la mesure et du rapport de CSI et/ou un attribut de période et un décalage de sous-trame destiné au rapport de CSI ; et
le contenu de la mesure et du rapport de CSI comprend un indicateur de qualité de canal, CQI, et/ou un indicateur de matrice de précodage, PMI, et/ou un indicateur de rang, RI et/ou un indicateur de ressource de signal de référence, CRI.

3. Procédé selon la revendication 1 ou 2, dans lequel l'établissement de signal de référence de CSI comprend un attribut de période de transmission de signal de référence de CSI et/ou un décalage de sous-trame et/ou un ensemble de signaux de référence CSI et/ou des informations de ressource de signal de référence de CSI ; et
les informations de ressource de signal de référence de CSI comprennent une quantité de ports de signal de référence de CSI et/ou un numéro de port de signal de référence de CSI et/ou un réglage de séquence d'apprentissage.

4. Procédé destiné à établir une mesure et un rapport des informations d'état de canal, comprenant :
• la réception, par un équipement d'utilisateur, d'une première signalisation envoyée par un dispositif réseau (S 302), dans lequel la première signalisation comprend au moins un établissement de mesure des informations d'état de canal, CSI, dans lequel chacun de l'au moins un établissement de mesure de CSI comprend :
o un premier établissement de rapport de CSI correspondant à un premier schéma de transmission et un second établissement de rapport de CSI correspondant à un second schéma de transmission, le premier schéma de transmission étant différent du second schéma de transmission, le second établissement de rapport de CSI étant fourni en plus du premier établissement de rapport de CSI, dans lequel le premier schéma de transmission est un schéma de transmission de multiplexage spatial, SM, et le second schéma de transmission est un schéma de transmission de diversité d'émission basée sur le faisceau, TxD, et
o un établissement de signal de référence de CSI, et l'établissement de signal de référence de CSI est utilisé par l'équipement d'utilisateur pour mesurer le CSI correspondant respectivement au premier et au second schéma de transmission ;
• la mesure, par l'équipement d'utilisateur sur la base de l'aau moins un établissement de signal de référence de CSI, le CSI correspondant respectivement aux premier et second schémas de transmission (S 303) ;
• la réception, par l'équipement d'utilisateur, d'une seconde signalisation envoyée par le dispositif réseau (S 304) ; et
• la notification, par l'équipement d'utilisateur, du CSI, parmi les CSI mesurés, correspondant à un ou plusieurs du premier et du second schéma de transmission au dispositif réseau selon la seconde signalisation (S 305).

5. Procédé selon la revendication 4, dans lequel chaque établissement de rapport de CSI parmi le premier et le second établissement de rapport de CSI comprend le contenu et une granularité de domaine de fréquence de la mesure et du rapport de CSI et/ou un attribut de période et un décalage de sous-trame destiné au rapport de CSI ; et
le contenu de la mesure et du rapport de CSI comprend un indicateur de qualité de canal, CQI, et/ou un indicateur de matrice de précodage, PMI, et/ou un indicateur de rang, RI, et/ou un indicateur de ressource de signal de référence, CRI.

6. Procédé selon la revendication 4 ou 5, dans lequel l'établissement de signal de référence de CSI comprendun attribut de période de transmission du signal de référence de CSI et/ou un décalage de sous-trame et des informations de ressource de signal de référence de CSI ; et
les informations de ressource de signal de référence de CSI comprennent une quantité de ports de signal de référence de CSI et/ou un numéro de port de signal de référence de CSI et/ou un réglage de séquence d'apprentissage.

7. Dispositif réseau configuré pour réaliser l'un des procédés selon les revendications 1 à 3.
